Europäisches Patentamt

European Patent Office

Office européen des brevets

(11) Publication number:

**0 326 378**
**A2**

# (12) EUROPEAN PATENT APPLICATION

(21) Application number: 89300742.7

(22) Date of filing: 26.01.89

(51) Int. Cl.4: **B 60 D 1/22**

(30) Priority: 27.01.88 GB 8801835

(43) Date of publication of application:
02.08.89 Bulletin 89/31

(84) Designated Contracting States: DE FR GB IT NL

(71) Applicant: Wilson, Geoffrey
509, Fulwood Road Fulwood
Sheffield S10 3QB Yorkshire (GB)

(72) Inventor: Wilson, Geoffrey
509, Fulwood Road Fulwood
Sheffield S10 3QB Yorkshire (GB)

(74) Representative: BATCHELLOR, KIRK & EYLES
2 Pear Tree Court Farringdon Road
London EC1R 0DS (GB)

(54) Improvements in anti-snake stabilisers.

(57) A stabiliser for connection between a unit being towed and the vehicle towing it has a friction damped device which damps out snaking movement. The device is pivoted on the unit being towed and can take up a position where the device is connected to the towing vehicle to act as a damper or it can readily be disengaged therefrom.

Fig 1.

**Description**

## IMPROVEMENTS IN ANTI-SNAKE STABILISERS

This invention relates to an anti-snake stabiliser suitable for connection between a towing vehicle and a unit to be towed and which serves to reduce the effect on the vehicle and the unit of torsional oscillations induced in the towing vehicle and the unit by, say, overtaking vehicles or high cross wind conditions.

Anti-snake stabilisers are well known. They typically comprise a torsional friction damper, one end of which is mechanically attached to the towing vehicle and the other end of which is slidably mounted in a bracket fixed to the unit being towed. Known stabilisers, however, have the disadvantage that, when the towing vehicle and the unit being towed are separated for individual use of the vehicle, the torsional stabiliser has to be removed and stored.

According to a first aspect of the present invention, a stabiliser for reducing snaking movement between a unit being towed and the vehicle towing the unit comprises location means adapted for securement to the vehicle and a friction damped device adapted for securement to the unit being towed such that, when so secured, it is pivotable between positions in which it is held by the location means to provide damping between the unit and the vehicle and in which it is separated from the location means, respectively.

According to a second aspect of the present invention, a stabiliser for reducing snaking movement between a unit being towed and the vehicle towing the unit comprises a first structure having a part which is mounted for damped relative rotation with respect to a part of a second structure, said second structure being arranged to be pivotably mounted on the unit such that it can be pivoted between a pair of positions in one of which the first structure is held by location means securable to the vehicle and capable of restricting rotation of the part of the first structure relative to the part of the second structure whilst permitting rotation of the part of the second structure relative to the part of the first structure and in the second of said positions the first structure is separated from said location means.

In order that the invention may be more readily understood, it will now be described, by way of example only, with reference to the accompanying drawings, in which:-

Figure 1 is a sectional side elevation of a stabiliser, shown in its operating position, in accordance with one embodiment of the invention;

Figure 2 is a plan view of Figure 1;

Figure 3 is a side elevation showing the stabiliser in its disengaged position; and

Figure 4 is a side elevation showing the stabiliser in position when the vehicle and towed unit are separated.

Reference numeral 10 denotes a towing bracket attached to the rear of the towing vehicle and this includes a conventional ball 11. A conventional socket coupling 12 is connected by way of an elongate cylindrical member 12A to the unit to be towed. A stabiliser is provided to reduce snaking movement between the unit and the vehicle when the unit is being towed.

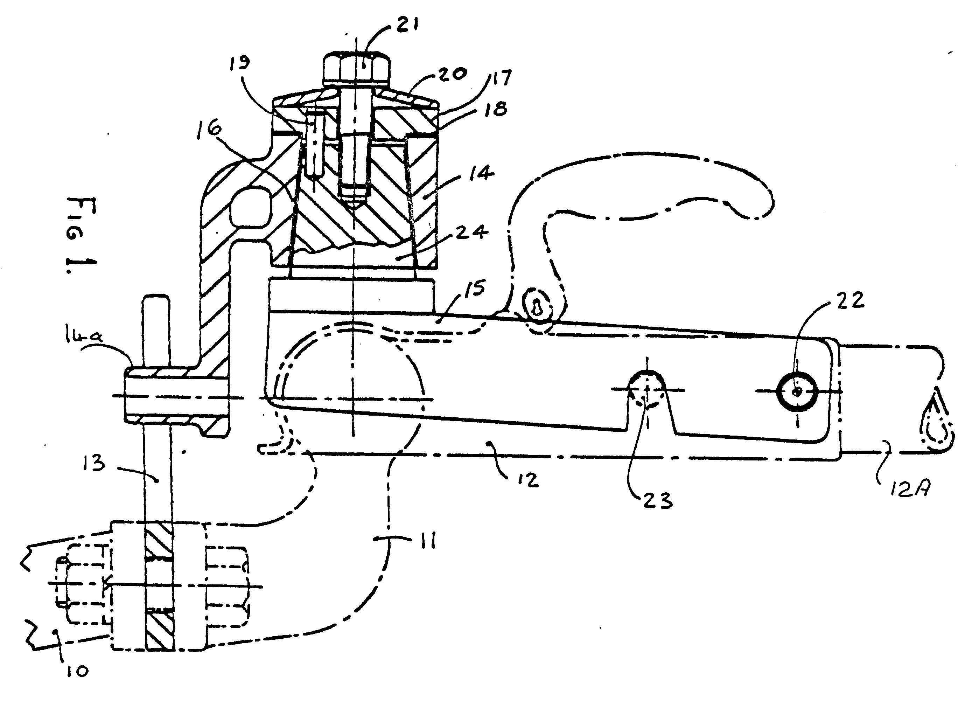

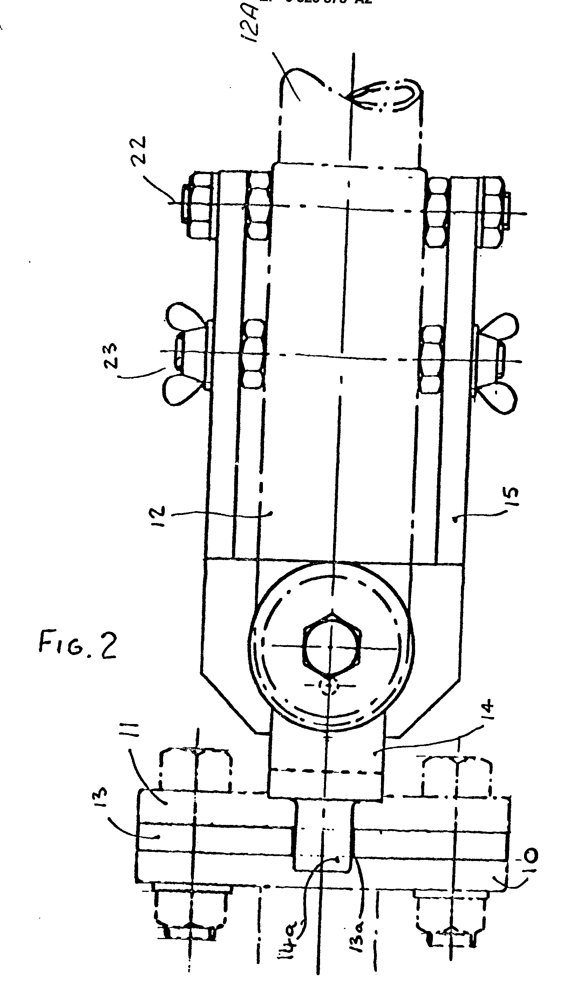

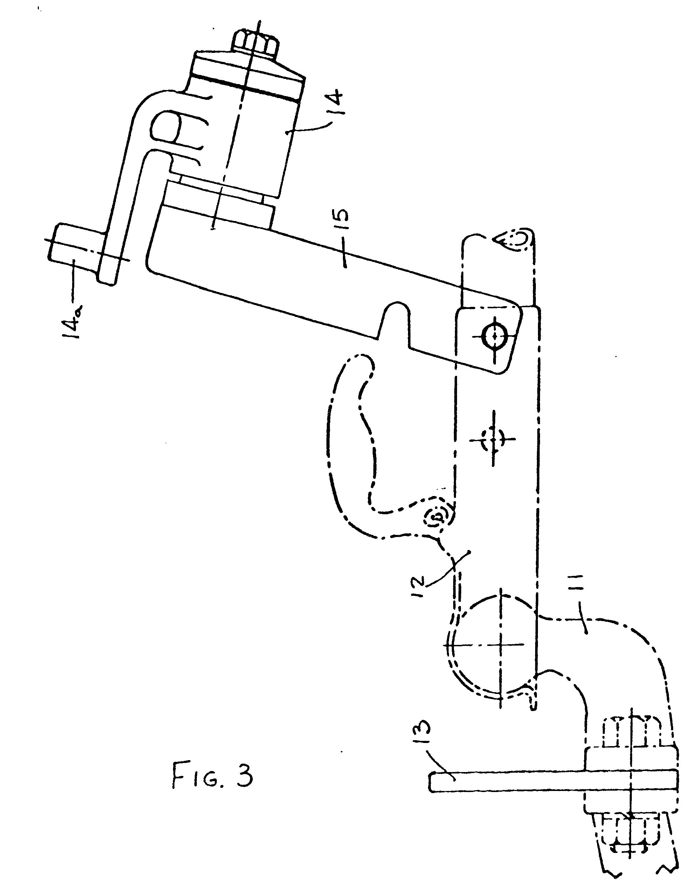

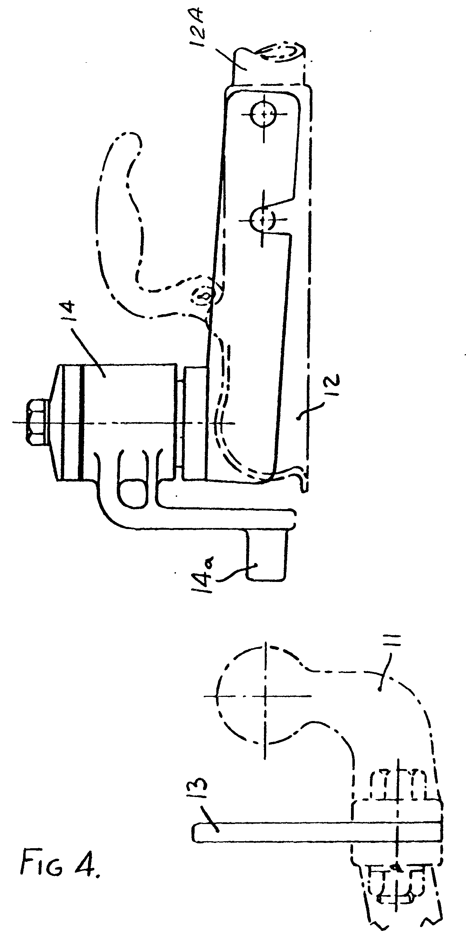

Referring to Figures 1 and 2, the stabiliser comprises a carrier structure 15 which is pivotally secured at one end to the socket coupling 12 about a horizontal axis 22. The other end of the carrier structure carries a frusto-conical member 24 which forms part of a torsional motion damper, the axis of the damper being vertical and preferably being aligned with the centre of the ball 11. The outer member of the damper 14 forms part of a further structure and provides a recess which accommodates the frusto-conical member 24 with a friction liner 16 between them. At the upper end of the element 14 there is a flanged plate 17 through which the friction damper is loaded. The load is transmitted through an annular thrust bearing 18. The flanged plate 17 is prevented from rotating relative to the member 24 by a pin 19 positioned offset from the axis of the member 24. The damper assembly is urged together by a conical spring 20 which sits centrally upon the flanged plate 17. The spring force is adjusted by tightening or loosening a bolt 21 which engages with a tapped hole in the frusto-conical member 24. The structure 14 of the stabiliser is provided with a drive extension 14a. A drive plate 13 having a notch 13a formed in its upper surface is clamped or otherwise secured to the bracket 10 so as to be substantially vertical. The stabiliser is, as mentioned above, pivoted about the axis 22, and it can be pivoted between a position in which the unit is in non-driving relation with the plate 13 (Figures 3 and 4) and the position shown in Figures 1 and 2 where the drive extension 14a fits in the notch 13a in the drive plate. In this position, the carrier 15 rests on a bolt 23 extending horizontally through the socket coupling 12 and wing nuts 23 are provided at its ends to removably secure the carrier to the socket.

If the elongate member 12A is rotatable about its longitudinal axis, the drive extension 14a of the stabiliser structure has to be arranged so that, when it is located in the notch 13a, its longitudinal axis passes through the centre of the ball 11.

When conditions exist to induce snaking, both the trailer and the vehicle oscillate in opposite directions about points at or near their centres of gravity. This oscillation imparts an arcular movement of the carrier 15 and inner torsional motion member 24 relative to the tow ball 11. Because the drive plate 13 is fixed relative to the tow ball 11, and locates the outer member of the torsional motion damper 14 through the extension 14a, motion occurs between the inner and outer members of the torsional damper unit. This motion is resisted by frictional resistance of the pre-loaded liner 16 interposed between parts 14 and 24 and assists in damping out the induced oscillations.

## Claims

1. A stabiliser for reducing snaking movement between a unit being towed and the vehicle towing the unit comprising location means adapted for securement to the vehicle and a friction damped device adapted for securement to the unit being towed such that, when so secured, it is pivotable between positions in which it is held by the location means to provide damping between the unit and the vehicle and in which it is separated from the location means, respectively.

2. A stabiliser for reducing snaking movement between a unit being towed and the vehicle towing the unit comprising a first structure having a part which is mounted for damped relative rotation with respect to a part of a second structure, said second structure being arranged to be pivotably mounted on the unit such that it can be pivoted between a pair of positions in one of which the first structure is held by location means securable to the vehicle and capable of restricting rotation of the part of the first structure relative to the part of the second structure whilst permitting rotation of the part of the second structure relative to the part of the first structure and in the second of said positions the first structure is separated from said location means.

3. A stabiliser as claimed in claim 1 or 2, in which the location means comprises a plate arranged to be mounted substantially vertically on the vehicle and with a notch in the uppermost edge of the plate.

4. A stabiliser as claimed in claim 3, in which a projection on the first structure extends into said notch to prevent rotation of the first structure.

5. A stabiliser as claimed in any preceding claim, in which the relatively movable parts of the first and second structures have friction material therebetween and means for adjusting the pressure between said parts.

Fig 1.

FIG. 2

FIG. 3

FIG 4.